# EUROPEAN PATENT APPLICATION

(11) **EP 4 063 573 A1**
(43) Date of publication of application: **28.09.2022**
(21) Application number: 21382226.5
(22) Date of filing: 22.03.2021
(51) Int. Cl.: E02F 9/28, F16B 21/06

(54) **FIXING SYSTEM OF A WEAR ELEMENT IN A SUPPORT ELEMENT OF AN EARTH MOVING MACHINE THROUGH A PIN AND A RETAINER**

(71) Applicant: Metalogenia Research & Technologies S.L., 08005 Barcelona (ES)
(72) Inventor: Rol Corredor, Javier, 08930 Sant Adrià del Besós (ES); Picon Manjón, Francesc, 08320 El Masnou (ES); Martinez Mañé, Angel, 08303 Mataró (ES); Marquez LLinas, Jordi, 08223 Terrassa (ES); Pérez Soria, Francisco, 08430 La Roca del Vallès (ES)
(74) Representative: Curell Suñol S.L.P.

(57) **Abstract**

The invention relates to a fixing system for fixing a wear element (16) in the nose (19) of a support element of an earth moving machine by means of a pin (7) which is housed in an opening of the wear element and in an opening (25) in the nose, coaxial with the opening of the wear element. The system comprises a retainer (1), which is a sheet material with a flexible flange (3) extending towards the path of the pin when it is introduced in the openings, interrupting said path. The retainer is fixed to the wear element or to the nose. The flange is bent towards the direction of the pin when it is introduced in the openings. The pin has a blocking segment (13) with a step the riser (15) of which is oriented such that the flange abuts against the riser when attempting to remove the pin. For its removal, the pin must be rotated about its axis until the flange comes out of the step and is arranged in a segment in which the side surface of the pin extends continuously until the final end (10) thereof.

## Description

### Field of the Invention

The invention relates to a retainer suitable for blocking a pin, the pin being suitable for fixing a wear element in a support element of an earth moving machine, the wear element comprising a cavity where, in an assembled position in which the wear element is assembled on the support element, a nose present in the support element is housed in the cavity, where the cavity is demarcated by side walls with at least one through opening arranged in one of the side walls, where the nose has a nose opening which, in the assembled position, is aligned with the through opening of the wear element, where, in the assembled position the pin is housed in the through opening and the nose opening, where the through opening defines a longitudinal axis, this longitudinal axis having a direction of insertion corresponding to the direction in which the pin is introduced in the through opening to achieve the assembled position.

The invention also relates to a pin suitable for fixing a wear element in a support element of an earth moving machine, the wear element comprising a cavity where, in an assembled position in which the wear element is assembled on the support element, a nose present in the support element is housed in the cavity, where the cavity is demarcated by side walls with at least one through opening arranged in one of the side walls, where the nose has a nose opening which, in the assembled position, is aligned with the through opening of the wear element, where, in the assembled position the pin is housed in the through opening and the nose opening, where the through opening defines a longitudinal axis, this longitudinal axis having a direction of insertion corresponding to the direction in which the pin is introduced in the through opening to achieve the assembled position, where the pin defines a longitudinal axis of the pin and has a first end with actuation means suitable for rotating the pin according to its longitudinal axis, and a second end, opposite the first end.

The invention also relates to a wear element of an earth moving machine, the wear element comprising a cavity where, in an assembled position in which the wear element is assembled on a support element, a nose present in the support element is housed in the cavity, where the cavity is demarcated by side walls with two openings arranged in two of the side walls opposite one another, which are aligned with one another and aligned, in the assembled position, with a through nose opening arranged in the nose, where the openings and the nose opening are suitable for housing therein a pin suitable for fixing the wear element in the nose in the assembled position, where the openings define a longitudinal axis, where the longitudinal axis has a direction of insertion corresponding to the direction in which the pin is introduced in the openings to achieve the assembled position, where the pin defines a longitudinal axis of the pin and has a first end with actuation means suitable for rotating the pin according to its longitudinal axis, and a second end, opposite the first end, where, in the assembled position, the first end is housed in one of the openings, referred to as inlet opening, which is a through opening, and the second end is housed in the other one of the openings, referred to as outlet opening.

The invention also relates to a wear assembly of an earth moving machine comprising a wear element and a pin, the wear element comprising a cavity where, in an assembled position in which the wear element is assembled on a support element, a nose present in the support element is housed in the cavity, where the cavity is demarcated by side walls with two openings arranged in two of the side walls opposite one another, and are aligned with one another and aligned, in the assembled position, with a through nose opening arranged in the nose, where the openings and the nose opening are suitable for housing therein the pin fixing the wear element in the nose in the assembled position, where the openings define a longitudinal axis, where the longitudinal axis has a direction of insertion corresponding to the direction in which the pin is introduced in the openings to achieve the assembled position, where the pin defines a longitudinal axis of the pin and has a first end with actuation means suitable for rotating the pin according to its longitudinal axis, and a second end, opposite the first end, where, in the assembled position, the first end is housed in one of the openings, referred to as inlet opening, which is a through opening, and the second end is housed in the other one of the through openings, referred to as outlet opening.

The invention also relates to an earth moving machine comprising a support element with a nose suitable for having a wear element assembled thereon by means of a pin, the wear element comprising a cavity where, in an assembled position in which the wear element is assembled on the support element, the nose is housed in the cavity, where the cavity is demarcated by side walls with at least one through opening arranged in one of the side walls, where the nose has a nose opening which, in the assembled position, is aligned with the through opening of the wear element, where, in the assembled position the pin is housed in the through opening and the nose opening, where the nose opening defines a longitudinal axis, the longitudinal axis having a direction of insertion corresponding to the direction in which the pin is introduced in the through opening to achieve the assembled position.

The invention likewise relates to a wear element of an earth moving machine, the wear element comprising a cavity where, in an assembled position in which the wear element is assembled on a support element, a nose present in the support element is housed in the cavity, where the cavity is demarcated by side walls with a through opening arranged in one of the side walls, which is aligned, in the assembled position, with a nose opening, arranged in the nose, where the through opening and the nose opening are suitable for housing therein a pin suitable for fixing the wear element in the nose in the assembled position, where the through opening defines a longitudinal axis, where the longitudinal axis has a direction of insertion corresponding to the direction in which the pin is introduced in the through opening to achieve the assembled position, where the pin defines a longitudinal axis of the pin and has a first end with actuation means suitable for rotating the pin according to its longitudinal axis, and a second end, opposite the first end, where, in the assembled position, the first end is housed in the through opening, referred to as inlet opening, and the second end is housed inside the nose opening.

Lastly, the invention also relates to a wear assembly of an earth moving machine comprising a wear element and a pin, the wear element comprising a cavity where, in an assembled position in which the wear element is assembled on a support element, a nose present in the support element is housed in the cavity, where the cavity is demarcated by side walls with a through opening arranged in one of the side walls, which is aligned, in the assembled position, with a nose opening, arranged in the nose, where the through opening and the nose opening are suitable for housing therein the pin fixing the wear element in the nose in the assembled position, where the through opening defines a longitudinal axis, where the longitudinal axis has a direction of insertion corresponding to the direction in which the pin is introduced in the through opening to achieve the assembled position, where the pin defines a longitudinal axis of the pin and has a first end with actuation means suitable for rotating the pin according to its longitudinal axis, and a second end, opposite the first end, where, in the assembled position, the first end is housed in the through opening, referred to as inlet opening, and the second end is housed inside the nose opening.

The present description and claims describe a set of parts (retainer, pin, wear element, support element) which, albeit independent parts, exhibit an interconnected function. Given that each of these elements is intended to be part of an assembly, the characteristics of one of them (particularly its physical dimensions) affect the rest, to the extent that they constitute starting data for designing the remaining elements. Generally, in patents and particularly in the independent claims of a patent, the dimensions and/or shape of a first element can be defined by means of a general reference to the dimensions or to the corresponding shape of a second element which is not part of the product protected by the independent claim, if both elements are related to one another by use. The designer of these assemblies will have a series of defined elements, particularly heights, that must be taken into account when designing each of the components of the assembly, regardless of whether these heights are of the component at hand or of other elements of the assembly, or even the general heights of the assembly as such.

In general, it must be taken into account that, in use, the wear element, the support element, the pin, and the retainer form an assembly that is used as such. However, the wear element suffers much more during use, so its mean service life is less than that of the support element or the pin. Thus, for example, it is common for the mean service life of an adapter (which is a common support element) to be 3 to 5 times longer (or even more) than the mean service life of a tooth of the shovel (which is a common wear element) of an earth moving machine. It is therefore common for the wear element to be fixed to the adapter in a manner such that it can be readily disassembled, usually by means of a pin, and for these three elements (wear elements, adapter, and pin) to be sold not only as assemblies formed by the three components (or by the adapter-wear element pair) but also separately, and it is necessary for the operations of changing out a used wear element with a new one to really be as quick, as simple, and as trouble-free as possible, which includes the pin not sustaining significant deformations and being easy to remove. It is therefore necessary to provide claims which protect the support element, the wear element, and the pin individually, because this is how said elements are usually found on the market. In turn, as will be seen below, the retainer is obtained based on a manufacturing technology (metallic or polymeric sheet material) that is very different from wear element and support element manufacturing technology (normally metallic cast parts). As a consequence, the retainer is probably manufactured by entities different from those manufacturing the wear element and the support element. Furthermore, although the retainer will be sold preassembled, forming an assembly with the wear element, in some cases, there is also the possibility of the retainer being sold separately, for example for the assembly thereof on the support element. It is therefore also necessary to have an independent claim relating to the retainer. Despite the plurality of independent claims compelled by the foregoing, these independent claims present the necessary unity of invention since they all share the same inventive concept.

### State of the Art

Earth moving machines are used in excavation, demolition, construction, mining, dredging, loading works, and similar activities. In general, they have a shovel or bucket in which the material is collected. The shovel or bucket is subjected to high stresses and significant erosion, particularly in the region of the lip (also referred to as blade). Therefore, the shovel or bucket usually has a plurality of wear elements protecting it from wear and impacts and/or improving ground penetration, such as teeth, supports, or tooth bar (also referred to as adapters) and/or (front and side) guards, for example.

All these wear or protection elements, and particularly the teeth, are subjected to high mechanical stresses, plastic deformations, and excessive wear. For this reason, they must typically be replaced every so often when breakage or wear thereof so requires. Since these elements have a limited service life, there is an ongoing interest in reducing manufacturing costs, as well as in facilitating the replacement of these elements to the extent possible. Furthermore, these machines can work in a wide range of applications, in which it may be necessary to change the design of the teeth in order to improve bucket performance.

The wear elements can be attached to other wear elements (such as a tooth attached to an adapter) and/or can be attached to the lip or blade of the bucket or shovel (such as a tooth attached to a lip or an adapter attached to a lip). In the present description and claims, the expression "support element" has been used to refer to any of these alternatives, for example, to the adapter when reference is made to the "adapter + wear element" pair, but to the lip of the shovel when reference is made to the "lip + wear element" or "lip + adapter" pair.

The wear or protection elements can be fixed in a mechanical manner (easier and quicker to change) or in a welded manner (more cost efficient but hard to change and with the risk of damaging the blade with the weld), depending on the degree of ground abrasiveness and on the dimensions of the machine. It must also be taken into account that large earth moving machines, particularly those operating in quarries and mines, are essential for production at said sites. Therefore, the downtimes of these machines can affect their productivity in a very substantial manner and it is of great interest to be able to change the wear elements in a quick and safe manner in the field, without having to bring the machine or the bucket to the workshop so that special equipment can be used. Therefore, it is usually advantageous to mechanically fix the wear elements and, to that end, to use a reversible blocking or fixing device, for example a pin.

The wear element usually has a cavity in which there is housed a nose arranged in the support element (for example, the adapter) on which the wear element will be assembled. The present invention relates to geometries of this type. However, there are various alternatives for fixing the wear element in the support element:
1. The support element has in its nose a through nose opening and the wear element has, in the side walls of its cavity, two openings (an inlet opening and an outlet opening). A single pin is housed in these three openings fixing the wear element to the nose of the support element. The outlet opening can be a through opening such that the final end (referred to in the present description and claims as "second end") of the pin can be seen from the outside.
2. The support element has in its nose a nose opening (generally, a blind opening) and the wear element has, in one of the side walls of its cavity, an opening (an inlet opening). A pin is housed in these two openings fixing the wear element to the nose of the support element. In this case, the second end of the pin is inside the nose opening.
3. There is a variant of the preceding case in which the nose has two nose openings (although it could be one through opening) and the wear element has, in the side walls of its cavity, two inlet openings. In this case, fixing is performed by means of two pins, with the second end of both pins being inside the respective nose openings (or the through nose opening). The two pins (and the corresponding openings) can be aligned with one another or can be arranged along two non-coinciding axes.

The present invention is applicable to any of these three cases.

In certain cases, the cavity and the nose are switched, i.e., the nose is in the wear element and the cavity is in the support element. Apart from that, all the observations made above are valid and, in fact, perfectly applicable to the present invention. Therefore, it must be understood that this opposite case is also an object of the present invention and that the claims also include this opposite case or relate at least to a case that is completely equivalent to that indicated in the claims.

In some cases, the pin is housed inside the nose opening before positioning the wear element on the nose. The pin then extends (or is moved) until it is housed in the opening present in the side wall of the cavity. In other cases, the wear element is first positioned on the nose, and then the pin (or pins) is inserted through the inlet opening present in the side wall of the cavity so that it penetrates the nose opening (exiting through the opposite side or not, depending on the three alternatives mentioned above). The present invention relates to this second group of cases.

### Description of the Invention

The object of the invention is a new fixing system of a wear element in a support element of an earth moving machine through a pin and a retainer. The new system comprises several elements and subassemblies.

Therefore, an object of the present invention is a retainer of the type indicated above characterized in that:
the retainer is formed from a sheet material comprising a perimeter segment, suitable for being fixed to a perimeter region of the through opening or of the nose opening, and a flexible flange joined at one end to the perimeter segment and suitable for extending towards the through opening or the nose opening, where the free end of the flexible flange is suitable for staying shifted forward, according to the direction of insertion, with respect to the perimeter segment.

Another object of the present invention is a pin of the type indicated above characterized in that:
the pin has a fixing region, where the fixing region coincides, in the direction of the longitudinal axis, with the through opening or with the beginning of the nose opening in the assembled position, where the fixing region has a blocking segment having a step, where the riser of the step is oriented towards the first end and is suitable for housing the free end of a flexible flange of a retainer, when the retainer is formed from a sheet material comprising a perimeter segment and the flexible flange joined at one end to the perimeter segment, the perimeter segment being fixed to a perimeter region of the through opening or of the nose opening, and the flexible flange extending towards the through opening or the nose opening, where the free end of the flexible flange stays shifted forward, according to the direction of insertion, with respect to the perimeter segment, thereby blocking the axial movement of the pin in the direction opposite the direction of insertion, the fixing region also comprising an unblocking segment arranged at the same distance as the blocking segment, in the direction of the longitudinal axis of the pin, with respect to the first end, the unblocking segment being displaced angularly, according to a rotation of the longitudinal axis of the pin, with respect to the blocking segment, where the unblocking segment does not have any step but rather has a smooth segment, in which the side surface of the pin extends continuously to the end of the second end.

In fact, the new system anchors the pin in its final position with a significant axial retention. The pin, when assembled, abuts against the flexible flange. Since the free end of the flexible flange stays shifted forward, according to the direction of insertion, the pin can bend the flange elastically and continue its forward movement, without having to exert a high force. When the pin reaches its final assembly position, the flange coincides with the step and can return to its original position, with the free end being in the lower edge of the step. Furthermore, a "clicking" sound will be produced, which will help the operator to know that the pin has reached its final position and that blocking through the flange has taken place. In contrast, the pin cannot move backward without plastically deforming the flange, which would require a very high force. A highly reliable fixing of the pin is thus achieved. However, if the pin is to be disassembled, it is sufficient to rotate it around its longitudinal axis as a result of the actuation means until the flange comes out of the blocking segment of the fixing region (i.e., no longer facing the step) and is located in the unblocking segment of the fixing region. This unblocking segment does not have a step with the riser oriented towards the first end, but rather has a smooth segment, in which the side surface of the pin extends continuously (i.e., without bumps, steps, or interruptions) all the way to the end of the second end (i.e., in this unblocking segment, the pin has a surface that is continuous to/flush with the rest of the side surface of the pin all the way to the second end), which allows the free end of the flange to slide on the surface of the pin without offering a high resistance.

The retainer being a sheet material refers to the fact that said retainer has a substantially laminar geometry (with a thickness that is much smaller than its other dimensions). It should not be understood that the retainer is an essentially metallic element, although said retainer being metallic is a preferred option as it will better withstand high temperatures and stresses. However, another preferred option is that the retainer is a polymeric material, which can constitute a particularly cost-effective alternative in the cases of systems with few mechanical and thermal requirements. In the case in which the retainer is metallic, a particularly advantageous option is austenitic stainless steel, which can withstand high temperatures without losing mechanical properties. An example could be steel for springs according to European Standard EN 10132-4:2000 C67S.

The perimeter segment of the retainer being fixed to a perimeter region of the through opening or of the nose opening must be understood as the perimeter segment being fixed close to the through opening or the nose opening, i.e., in what can be considered as the perimeter region of these openings. The exact distance between the perimeter segment and the through opening (or the nose opening) is not relevant for the present invention, and one skilled in the art will be able to determine the distance most suitable for each case depending on other requirements not related with the present invention.

The new system has a plurality of additional advantages:
- The retainer has a remarkably simple geometry, and in the case where it is metallic, said retainer can be obtained by means of die-cutting from a sheet of metallic material. The cost is therefore very low.
- The pin can be assembled and disassembled without requiring special tools. Preferably, the actuation means comprise an opening coaxial with the longitudinal axis of the pin and arranged at the first end, where the opening has a non-circular cross-section (preferably polygonal, and very preferably square). Therefore, the operator only needs a wrench with a head with the shape corresponding to the opening to rotate the pin. The process of disassembling the pin can be performed without having to use a hammer.
- It is a solution that does not place the geometry, the wear element, or the nose at a disadvantage. Other current alternatives are always bulkier, making it necessary to sacrifice material of the wear element and/or of the nose to leave space for the pin and the corresponding retention means, or the pin and/or the retention elements must be protected, which also negatively conditions the design of the wear element and/or of the nose.

Preferably, the perimeter segment of the retainer extends forming a closed perimeter frame, where the flange extends towards the inside of the frame. In this case, in the assembled position, the perimeter frame circumscribes the through opening or the nose opening. The flange extends towards the inside of the frame but, simultaneously, as has already been indicated, extends (or stays shifted) forward according to the direction of insertion. In other words, it moves towards the so-called longitudinal axis of the through opening but away from the frame according to the direction of the longitudinal axis. The closed perimeter frame is preferably rectangular or square. However, any geometry is possible, either non-rounded geometries or even rounded geometries, particularly if the perimeter segment has snap-fitting means (see below), because the snap-fitting means would then be responsible for ensuring that the retainer stays in place.

When the perimeter segment forms a closed perimeter frame, it is advantageous for it to have two flanges, arranged in opposite regions of the closed perimeter frame, the flanges being joined to the closed perimeter frame and extending towards the inside of the closed perimeter frame, where the free ends of both flexible flanges are suitable for staying shifted forward, according to the direction of insertion, with respect to the closed perimeter frame. A double fixing and a symmetrical distribution of stresses on the pin are thereby achieved without any additional cost.

Preferably, the perimeter segment has first snap-fitting means suitable for being assembled on second snap-fitting means present in the perimeter region of the opening, thereby fixing the retainer to the perimeter region. In fact, as will be seen below in the examples, these snap-fitting means can be readily incorporated and are very easy to assemble. Preferably, the snap-fitting means fix the retainer not only in the direction of the longitudinal axis but also in two transverse directions, thereby achieving the complete fixing of the retainer. This solution is particularly advantageous when the perimeter segment is a closed perimeter frame.

In turn, the pin preferably has a fixing region having two blocking segments arranged at the same distance, in the direction of the longitudinal axis of the pin, with respect to the first end and arranged on circumferentially opposite sides, where each blocking segment has a step, where the riser of each step is oriented towards the first end and is suitable for housing the free end of one of the flexible flanges of a retainer, when the retainer has a perimeter segment that extends forming a closed perimeter frame and two flanges arranged in opposite regions of the closed perimeter frame, the flanges being joined to the closed perimeter frame and extending towards the inside of the closed perimeter frame, the closed perimeter frame being fixed to a perimeter region of the through opening or of the nose opening, where the free ends of both flexible flanges are suitable for staying shifted forward, according to the direction of insertion, with respect to the closed perimeter frame, thereby blocking the axial movement of the second end in the direction opposite the direction of insertion, the fixing region also comprising two unblocking segments arranged at the same distance as the blocking segments, in the direction of the longitudinal axis of the pin, with respect to the first end, the unblocking segments being displaced angularly, according to a rotation of the longitudinal axis of the pin, with respect to the blocking segments, where the unblocking segments do not have the step but rather have a smooth segment, in which the side surface of the pin extends continuously to the end of the second end. This pin is particularly interesting when the retainer has a closed perimeter frame and two flanges, because each of the flanges will then interact with one of the blocking and unblocking segments. However, this pin can also be used when two independent retainers are used, each of them with a flange, both retainers being arranged on opposite sides of the corresponding opening.

As will be described in detail below, the pin consists of two preferred embodiments depending on which of the three alternatives for fixing the wear element in the support element is applied in the invention:
- Pin having the fixing region close to the second end.
- Pin having the fixing region close to the first end.

Preferably, the pin has a stop at its first end. This stop prevents the pin from being introduced too far. It can also be used for guiding the position of the pin during its introduction, such that it is properly oriented.

A particularly advantageous embodiment of the invention is when it is applied to the first alternative for fixing the wear element in the support element, i.e., when the support element has in its nose a through nose opening and the wear element has, in the side walls of its cavity, two openings (an inlet opening and an outlet opening), with a single pin which is housed in these three openings fixing the wear element to the nose of the support element. In this case, the object of the invention is a wear element of an earth moving machine, the wear element comprising a cavity where, in an assembled position in which the wear element is assembled on a support element, a nose present in the support element is housed in the cavity, where the cavity is demarcated by side walls with two openings arranged in two of the side walls opposite one another, which are aligned with one another and aligned, in the assembled position, with a through nose opening arranged in the nose, where the openings and the nose opening are suitable for housing therein a pin suitable for fixing the wear element in the nose in the assembled position, where the openings define a longitudinal axis, where the longitudinal axis has a direction of insertion corresponding to the direction in which the pin is introduced in the openings to achieve the assembled position, where the pin defines a longitudinal axis of the pin and has a first end with actuation means suitable for rotating the pin according to its longitudinal axis, and a second end, opposite the first end, where, in the assembled position, the first end is housed in one of the openings, referred to as inlet opening, which is a through opening, and the second end is housed in the other one of the openings, referred to as outlet opening,
characterized in that:
the wear element comprises a retainer fixed to the inner face of the side wall comprising the outlet opening, the retainer being formed from a sheet material comprising a perimeter segment fixed to the inner face in a perimeter region of the outlet opening, and a flexible flange joined at one end to the perimeter segment and extending towards the outlet opening, where the free end of the flexible flange is inside the outlet opening.

Besides the advantages already mentioned above, supplying the wear element together with the retainer has the following advantages:
- The position of the retainer in the outlet opening means that the pin can be introduced almost entirely before being subjected to friction by the flexible flanges.
- The service life of the retainer is preferably the same as the service life of the wear element. By supplying both elements as a unit, logistics management is made easier. Furthermore, it can be supplied to the user already assembled, saving labor costs.
- In the case where the outlet opening is a through opening, a very simple visual control system to check that the pin has been assembled correctly is provided.
- In various solutions of the state of the art, the retention means are in the head of the pin. The head of the pin is already a weakened region due to the presence of the actuation means. With the present solution, the retention means (or the fixing region, and particularly the blocking segments) are close to the second end.

This preferred solution is compatible with the preferred solutions that are already indicated above (alone or in combination) for the retainer as an independent element, specific to this given case. In particular:
- The perimeter segment of the retainer extends forming a closed perimeter frame completely bordering the outlet opening.
- The retainer has two flexible flanges arranged in opposite regions of the closed perimeter frame and joined to the closed perimeter frame and extending towards the outlet opening, where the free end of both flexible flanges is inside the outlet opening.
- The retainer is metallic and is preferably made of austenitic stainless steel.
- The retainer is attached to the wear element by means of welding.
- The retainer is made of plastic.
- The perimeter segment has first snap-fitting means and the inner face of the side wall has second corresponding snap-fitting means, where the first snap-fitting means are suitable for being assembled on the second snap-fitting means, thereby fixing the retainer to the inner face. This is applicable to the case in which the retainer is not attached to the wear element by means of welding.

Another advantageous solution is when the inner face of the side wall has a recess suitable for housing therein the perimeter segment. In this manner, the thickness of the retainer is prevented from being able to interfere with the entry of the nose in the cavity. A better protection of the retainer against lateral stresses applied to the assembly is also achieved, particularly smashing between the wear element and the support element when they contact one another laterally is prevented.

Another advantageous solution is when the side wall with the inlet opening has, on its outer face, a recess extending to the inlet opening, suitable for housing therein a stop arranged at the first end of the pin.

In general, a preferred embodiment of the invention consists of a wear element of an earth moving machine, the wear element comprising a cavity where, in an assembled position in which the wear element is assembled on a support element, a nose present in the support element is housed in the cavity, where the cavity is demarcated by side walls with two openings arranged in two of the side walls opposite one another, and are aligned with one another and aligned, in the assembled position, with a through nose opening arranged in the nose, where the openings and the nose opening are suitable for housing therein a pin suitable for fixing the wear element in the nose in the assembled position, where the openings define a longitudinal axis, where the longitudinal axis has a direction of insertion corresponding to the direction in which the pin is introduced in the openings to achieve the assembled position, where the pin defines a longitudinal axis of the pin and has a first end with actuation means suitable for rotating the pin according to its longitudinal axis, and a second end, where, in the assembled position, the first end is housed in one of the openings, referred to as inlet opening, which is a through opening and the second end is housed in the other one of the openings, referred to as outlet opening,
characterized in that:
the wear element comprises a retainer according to the invention, where the perimeter segment is fixed to the inner face of the side wall comprising the outlet opening, in a perimeter region of the outlet opening, and where the flexible flange extends towards the outlet opening, where the free end of the flexible flange is inside the outlet opening.

Another preferred embodiment of the invention is when the wear element with the retainer incorporated and the corresponding pin are grouped together. In that sense, another object of the invention is a wear assembly of an earth moving machine comprising a wear element and a pin, the wear element comprising a cavity where, in an assembled position in which the wear element is assembled on a support element, a nose present in the support element is housed in the cavity, where the cavity is demarcated by side walls with two openings arranged in two of the side walls opposite one another, and are aligned with one another and aligned, in the assembled position, with a through nose opening arranged in the nose, where the openings and the nose opening are suitable for housing therein the pin fixing the wear element in the nose in the assembled position, where the openings define a longitudinal axis, where the longitudinal axis has a direction of insertion corresponding to the direction in which the pin is introduced in the openings to achieve the assembled position, where the pin defines a longitudinal axis of the pin and has a first end with actuation means suitable for rotating the pin according to its longitudinal axis, and a second end, opposite the first end, where, in the assembled position, the first end is housed in one of the openings, referred to as inlet opening, which is a through opening, and the second end is housed in the other one of the through openings, referred to as outlet opening,
characterized in that:
the wear element comprises a retainer fixed to the inner face of the side wall comprising the outlet opening, the retainer being formed from a sheet material comprising a perimeter segment fixed to the inner face in a perimeter region of the outlet opening, and a flexible flange joined at one end to the perimeter segment and extending towards the outlet opening, where the free end of the flexible flange is inside the outlet opening,
and in that
the pin has a fixing region, where the fixing region coincides, in the direction of the longitudinal axis, with the outlet opening in the assembled position, where the fixing region has a blocking segment having a step, where the riser of the step is oriented towards the first end and houses the free end of the flexible flange, thereby blocking the axial movement of the pin in the direction opposite the direction of insertion,
the fixing region also comprising an unblocking segment arranged at the same distance as the blocking segment, in the direction of the longitudinal axis of the pin, with respect to the first end, the unblocking segment being displaced angularly, according to a rotation of the longitudinal axis of the pin, with respect to the blocking segment, where the unblocking segment does not have any step but rather has a smooth segment, in which the side surface of the pin extends continuously to the end of the second end.

This preferred solution is again compatible with the preferred solutions that are already indicated above (alone or in combination) for the retainer and the pin as independent elements, specific to this given case, as well as for the wear element with the retainer incorporated. In particular:
- The perimeter segment of the retainer extends forming a closed perimeter frame completely bordering the outlet opening.
- The retainer has two flexible flanges arranged in opposite regions of the closed perimeter frame and joined to the closed perimeter frame and extending towards the outlet opening, where the free end of both flexible flanges is inside the outlet opening, and in that the fixing region of the pin has two blocking segments arranged at the same distance, in the direction of the longitudinal axis of the pin, with respect to the first end and arranged on circumferentially opposite sides, where each blocking segment has a step, where the riser of each step is oriented towards the first end and is suitable for housing the free end of one of the flexible flanges of the retainer, thereby blocking the axial movement of the second end in the direction opposite the direction of insertion, the fixing region also comprising two unblocking segments arranged at the same distance as the blocking segments, in the direction of the longitudinal axis of the pin, with respect to the first end, the unblocking segments being displaced angularly, according to a rotation of the longitudinal axis of the pin, with respect to the blocking segments, where the unblocking segments do not have the step but rather have a smooth segment, in which the side surface of the pin extends continuously to the end of the second end.

- The retainer is metallic and is preferably made of austenitic stainless steel.
- The retainer is attached to the wear element by means of welding.
- The retainer is made of plastic.
- The perimeter segment has first snap-fitting means and the inner face of the side wall has second corresponding snap-fitting means, where the first snap-fitting means are suitable for being assembled on the second snap-fitting means, thereby fixing the retainer to the inner face. This is applicable to the case in which the retainer is not attached to the wear element by means of welding.
- The inner face of the side wall has a recess in which the perimeter segment is housed.
- The side wall with the inlet opening has, on its outer face, a recess extending to the inlet opening, suitable for housing therein a stop arranged at the first end of the pin.

In general, another preferred embodiment consists of a wear assembly of an earth moving machine comprising a wear element according to the invention, and a pin according to the invention, where the fixing region coincides, in the direction of the longitudinal axis, with the outlet opening in the assembled position, where the riser of the step houses the free end of the flexible flange, thereby blocking the axial movement of the pin in the direction opposite the direction of insertion.

Another particularly advantageous embodiment of the invention is when it is applied to the second or third alternatives for fixing the wear element in the support element, i.e., when, in general, the second end of the pin is inside the nose opening. In these cases, in the assembled position, the retainer will not be in a region close to the second end of the pin (like in the solutions of the invention applicable to the first alternative for fixing the wear element in the support element), rather the retainer will be in a region close to the first end of the pin. The solutions offered by the invention in these cases can be divided into two large blocks, depending on whether the retainer is fixed to the nose of the support element or to the wear element.

Within the first block, the object of the invention is an earth moving machine comprising a support element with a nose suitable for having a wear element assembled thereon by means of a pin, the wear element comprising a cavity where, in an assembled position in which the wear element is assembled on the support element, the nose is housed in the cavity, where the cavity is demarcated by side walls with at least one through opening arranged in one of the side walls, where the nose has a nose opening which, in the assembled position, is aligned with the through opening of the wear element, where, in the assembled position the pin is housed in the through opening and the nose opening, where the nose opening defines a longitudinal axis, the longitudinal axis having a direction of insertion corresponding to the direction in which the pin is introduced in the through opening to achieve the assembled position,
characterized in that:
it comprises a retainer which is formed from a sheet material comprising a perimeter segment, fixed to a perimeter region of the nose opening, and a flexible flange joined at one end to the perimeter segment and extending towards the inside of the nose opening.

Like in the preceding cases, this preferred solution is compatible with the preferred solutions that are already indicated above (alone or in combination) for the retainer and the pin as independent elements, specific to this given case. In particular:
- The perimeter segment of the retainer extends forming a closed perimeter frame completely bordering the nose opening.
- The retainer has two flexible flanges arranged in opposite regions of the closed perimeter frame, the flanges being joined to the closed perimeter frame and both extending towards the nose opening, where the free ends of both flexible flanges are inside the nose opening.
- The retainer is metallic and is preferably made of austenitic stainless steel.
- The retainer is made of plastic.
- The perimeter segment of the retainer has first snap-fitting means suitable for being assembled on second snap-fitting means present in the perimeter region of the nose opening, thereby fixing the retainer to the perimeter region.
- The perimeter region of the nose opening has a recess in which the perimeter segment is housed.
- The nose has two nose openings (which may or may not be aligned) or has a through nose opening, the wear element has two inlet openings and there are two retainers, one for each nose opening (or for each end of the through nose opening). In other words, the concept is exactly the same as in the case of one opening, but in duplicate, such that two pins can be used for fixing the wear element to the nose.
- It comprises the pin, where the pin defines a longitudinal axis of the pin and has a first end with actuation means suitable for rotating the pin according to its longitudinal axis, and a second end, opposite the first end, where, in the assembled position, the first end is housed in the through opening and the second end is housed in the nose opening, where the pin has a fixing region, where the fixing region coincides, in the direction of the longitudinal axis, with the beginning of the nose opening in the assembled position, where the fixing region has a blocking segment having a step, where the riser of the step is oriented towards the first end and houses the free end of the flexible flange of the retainer, thereby blocking the axial movement of the pin in the direction opposite the direction of insertion, the fixing region also comprising an unblocking segment arranged at the same distance as the blocking segment, in the direction of the longitudinal axis of the pin, with respect to the first end, the unblocking segment being displaced angularly, according to a rotation of the longitudinal axis of the pin, with respect to the blocking segment, where the unblocking segment does not have any step but rather has a smooth segment, in which the side surface of the pin extends continuously to the end of the second end.
- As an additional improvement to the preceding point, the retainer has two flexible flanges arranged in opposite regions of the closed perimeter frame and joined to the closed perimeter frame and extending towards the nose opening, where the free end of both flexible flanges is inside the nose opening, and in that the fixing region of the pin has two blocking segments arranged at the same distance, in the direction of the longitudinal axis of the pin, with respect to the first end and arranged on circumferentially opposite sides, where each blocking segment has a step, where the riser of each step is oriented towards the first end and is suitable for housing the free end of one of the flexible flanges of the retainer, thereby blocking the axial movement of the second end in the direction opposite the direction of insertion, the fixing region also comprising two unblocking segments arranged at the same distance as the blocking segments, in the direction of the longitudinal axis of the pin, with respect to the first end, the unblocking segments being displaced angularly, according to a rotation of the longitudinal axis of the pin, with respect to the blocking segments, where the unblocking segments do not have the step but rather have a smooth segment, in which the side surface of the pin extends continuously to the end of the second end.

In general, another preferred embodiment is an earth moving machine comprising a support element with a nose suitable for having a wear element assembled thereon by means of a pin, the wear element comprising a cavity where, in an assembled position in which the wear element is assembled on the support element, the nose is housed in the cavity, where the cavity is demarcated by side walls with at least one through opening arranged in one of the side walls, where the nose has a nose opening which, in the assembled position, is aligned with the through opening of the wear element, where, in the assembled position the pin is housed in the through opening and the nose opening, where the nose opening defines a longitudinal axis, the longitudinal axis having a direction of insertion corresponding to the direction in which the pin is introduced in the through opening to achieve the assembled position,
characterized in that:
it comprises a retainer according to the invention, where the perimeter segment is fixed to a perimeter region of the nose opening and the flexible flange extends towards the inside of the nose opening. Preferably, the machine comprises a pin according to the invention, where the fixing region coincides, in the direction of the longitudinal axis, with the beginning of the nose opening in the assembled position.

Within the second block (with the retainer fixed to the wear element), another object of the invention is a wear element of an earth moving machine, the wear element comprising a cavity where, in an assembled position in which the wear element is assembled on a support element, a nose present in the support element is housed in the cavity, where the cavity is demarcated by side walls with a through opening arranged in one of the side walls, which is aligned, in the assembled position, with a nose opening, arranged in the nose, where the through opening and the nose opening are suitable for housing therein a pin suitable for fixing the wear element in the nose in the assembled position, where the through opening defines a longitudinal axis, where the longitudinal axis has a direction of insertion corresponding to the direction in which the pin is introduced in the through opening to achieve the assembled position, where the pin defines a longitudinal axis of the pin and has a first end with actuation means suitable for rotating the pin according to its longitudinal axis, and a second end, opposite the first end, where, in the assembled position, the first end is housed in the through opening, referred to as inlet opening, and the second end is housed inside the nose opening,
characterized in that:
the wear element comprises a retainer fixed to the inner face of the side wall comprising the inlet opening, the retainer being formed from a sheet material comprising a perimeter segment fixed to the inner face in a perimeter region of the inlet opening, and a flexible flange joined at one end to the perimeter segment and extending towards the nose opening, where the free end of the flexible flange stays shifted forward, according to the direction of insertion, with respect to the perimeter segment.

Like in the preceding cases, this preferred solution is compatible with the preferred solutions that are already indicated above (alone or in combination) for the retainer as an independent element, specific to this given case. In particular:
- The perimeter segment of the retainer extends forming a closed perimeter frame completely bordering the inlet opening.
- The retainer has two flexible flanges arranged in opposite regions of the closed perimeter frame and joined to the closed perimeter frame and extending towards the nose opening, where the free end of both flexible flanges stays shifted forward, according to the direction of insertion, with respect to the perimeter segment.
- The retainer is metallic and is preferably made of austenitic stainless steel.
- The retainer is attached to the wear element by means of welding.
- The retainer is made of plastic.
- The perimeter segment has first snap-fitting means and the inner face of the side wall has second corresponding snap-fitting means, where the first snap-fitting means are suitable for being assembled on the second snap-fitting means, thereby fixing the retainer to the inner face. This is applicable to the case in which the retainer is not attached to the wear element by means of welding.
- The inner face of the side wall has a recess suitable for housing therein the perimeter segment.
- The side wall with the inlet opening has, on its outer face, a recess extending to the inlet opening, suitable for housing therein a stop arranged at the first end of the pin.
- The wear element has two inlet openings and there are two retainers, one for each inlet opening, such that the wear element can be fixed to a nose having two nose openings (which may or may not be aligned) or a through nose opening, with two pins. In other words, the concept is exactly the same as in the case of one inlet opening, but in duplicate, such that two pins can be used for fixing the wear element to the nose.

Another preferred embodiment is a wear element of an earth moving machine, the wear element comprising a cavity where, in an assembled position in which the wear element is assembled on a support element, a nose present in the support element is housed in the cavity, where the cavity is demarcated by side walls with a through opening arranged in one of the side walls, which is aligned, in the assembled position, with a nose opening arranged in the nose, where the through opening and the nose opening are suitable for housing therein a pin suitable for fixing the wear element in the nose in the assembled position, where the through opening defines a longitudinal axis, where the longitudinal axis has a direction of insertion corresponding to the direction in which the pin is introduced in the through opening to achieve the assembled position, where the pin defines a longitudinal axis of the pin and has a first end with actuation means suitable for rotating the pin according to its longitudinal axis, and a second end, where, in the assembled position the first end is housed in the through opening, referred to as inlet opening, and the second end is housed inside the nose opening,
characterized in that:
the wear element comprises a retainer according to the invention, where the perimeter segment is fixed to the inner face of the side wall comprising the inlet opening in a perimeter region of the inlet opening, and where the flexible flange extends towards the nose opening, where the free end of the flexible flange stays shifted forward, according to the direction of insertion, with respect to the perimeter segment.

Likewise, an assembly formed by a wear element and the corresponding pin, similar to what has been done above, can be defined within the second block. In that sense, another object of the invention is a wear assembly of an earth moving machine comprising a wear element and a pin, the wear element comprising a cavity where, in an assembled position in which the wear element is assembled on a support element, a nose present in the support element is housed in the cavity, where the cavity is demarcated by side walls with a through opening arranged in one of the side walls, which is aligned, in the assembled position, with a nose opening, arranged in the nose, where the through opening and the nose opening are suitable for housing therein the pin fixing the wear element in the nose in the assembled position, where the through opening defines a longitudinal axis, where the longitudinal axis has a direction of insertion corresponding to the direction in which the pin is introduced in the through opening to achieve the assembled position, where the pin defines a longitudinal axis of the pin and has a first end with actuation means suitable for rotating the pin according to its longitudinal axis, and a second end, opposite the first end, where, in the assembled position, the first end is housed in the through opening, referred to as inlet opening, and the second end is housed inside the nose opening,
characterized in that:
the wear element comprises a retainer fixed to the inner face of the side wall comprising the inlet opening, the retainer being formed from a sheet material comprising a perimeter segment fixed to the inner face in a perimeter region of the inlet opening, and a flexible flange joined at one end to the perimeter segment and extending towards the nose opening, where the free end of the flexible flange stays shifted forward, according to the direction of insertion, with respect to the perimeter segment,
and in that
the pin has a fixing region, where the fixing region coincides, in the direction of the longitudinal axis, with the inlet opening in the assembled position, where the fixing region has a blocking segment having a step, where the riser of the step is oriented towards the first end and houses the free end of the flexible flange, thereby blocking the axial movement of the pin in the direction opposite the direction of insertion, the fixing region also comprising an unblocking segment arranged at the same distance as the blocking segment, in the direction of the longitudinal axis of the pin, with respect to the first end, the unblocking segment being displaced angularly, according to a rotation of the longitudinal axis of the pin, with respect to the blocking segment, where the unblocking segment does not have any step but rather has a smooth segment, in which the side surface of the pin extends continuously to the end of the second end.

Once again, this preferred solution is compatible with the preferred solutions that are already indicated above (alone or in combination) for the retainer and the pin as independent elements, specific to this given case. In particular:
- The perimeter segment of the retainer extends forming a closed perimeter frame completely bordering the outlet opening.
- The retainer has two flexible flanges arranged in opposite regions of the closed perimeter frame and joined to the closed perimeter frame and extending towards the nose opening, where the free end of both flexible flanges stays shifted forward, according to the direction of insertion, with respect to the perimeter segment, and in that the fixing region of the pin has two blocking segments arranged at the same distance, in the direction of the longitudinal axis of the pin, with respect to the first end and arranged on circumferentially opposite sides, where each blocking segment has a step, where the riser of each step is oriented towards the first end and is suitable for housing the free end of one of the flexible flanges of the retainer, thereby blocking the axial movement of the second end in the direction opposite the direction of insertion, the fixing region also comprising two unblocking segments arranged at the same distance as the blocking segments, in the direction of the longitudinal axis of the pin, with respect to the first end, the unblocking segments being displaced angularly, according to a rotation of the longitudinal axis of the pin, with respect to the blocking segments, where the unblocking segments do not have the step but rather have a smooth segment, in which the side surface of the pin extends continuously to the end of the second end.

- The retainer is metallic and is preferably made of austenitic stainless steel.
- The retainer is attached to the wear element by means of welding.
- The retainer is made of plastic.
- The perimeter segment has first snap-fitting means and the inner face of the side wall has second corresponding snap-fitting means, where the first snap-fitting means are suitable for being assembled on the second snap-fitting means, thereby fixing the retainer to the inner face. This is applicable to the case in which the retainer is not attached to the wear element by means of welding
- The inner face of the side wall has a recess in which the perimeter segment is housed.
- The side wall with the inlet opening has, on its outer face, a recess extending to the inlet opening, suitable for housing therein a stop arranged at the first end of the pin.

Lastly, another object of the invention is a wear assembly of an earth moving machine comprising a wear element according to the invention, specifically for the solution rendered to the aforementioned second block, and a pin according to the invention, where the fixing region coincides, in the direction of the longitudinal axis, with the inlet opening in the assembled position, where the riser of the step houses the free end of the flexible flange, thereby blocking the axial movement of the pin in the direction opposite the direction of insertion.

In general, it may be advantageous to assemble a plurality of retainers (preferably 2) stacked on top of one another. Greater mechanical resistance against the possibility of the retainer coming out (as if it was a retainer that is twice as thick) is thereby achieved, but without losing the elastic properties needed for the assembly to remain flexible and for allowing the insertion of the pin.

In general, it may be advantageous for the retainer to comprise a sheet of elastic material, preferably an elastomeric polymer material, arranged on the face oriented towards the inside of the cavity. This sheet of elastic material allows laterally stabilizing the fitting between the wear element and the nose, eliminating (or at least reducing) the play between both.

### Brief Description of the Drawings

Other advantages and features of the invention will become apparent from the following description in which preferred embodiments of the invention are described in a non-limiting manner in reference to the attached drawings. In the figures:
Figure 1 shows a perspective view of a first embodiment of a retainer according to the invention.
Figures 2, 3, and 4 show a perspective view, a plan view, and an elevational view, respectively, of a second embodiment of a retainer according to the invention.
Figures 5, 6, 7, and 8 show a perspective view, a front elevational view, a side elevational view, and a plan view of a first embodiment of a pin according to the invention.
Figures 9, 10, 11, and 12 show a front perspective view, a rear perspective view, an elevational view, and a plan view of a third embodiment of a retainer according to the invention.
Figure 13 shows a perspective view of a wear element and a retainer before being assembled.
Figure 14 shows a perspective view of the wear element and the retainer of Figure 13, assembled.
Figures 15, 16, 17, and 18 show a cross-section of a wear element with a retainer assembled on a nose of a support element and a pin, in 4 moments of the pin insertion step.
Figure 19 shows an exploded perspective view of a wear element, a support element, a pin, and a retainer.
Figure 20 shows a rear perspective view of the assembly of Figure 19, assembled.
Figure 21 shows a detailed view of the region of the outlet opening of the wear element.
Figure 22 shows a perspective view of a nose of a support element with a retainer assembled and a pin housed in its nose opening.
Figure 23 shows a rear perspective view of a wear element with two retainers assembled and two pins housed in both inlet openings.
Figure 24 shows a cross-section of a wear element with two retainers assembled on a nose of a support element and with the two corresponding pins.
Figure 25 shows an exploded perspective view of a retainer including a sheet of elastic material.
Figure 26 shows a view equivalent to Figure 18, but with the retainer of Figure 25.
Figure 27 shows a detailed view of the region of the retainer of Figure 26.

### Detailed Description of Embodiments of the Invention

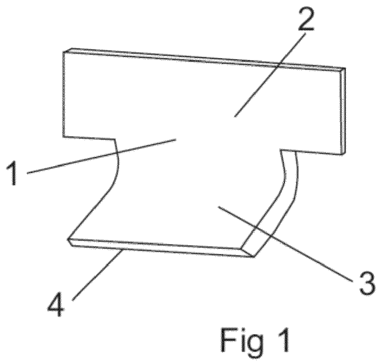

Figure 1 shows a retainer 1 according to the invention. It is formed from a sheet material, specifically a sheet of die-cut and bent metallic material, such that it comprises a perimeter segment 2 and a flexible flange 3 extending from the perimeter segment 2 and has the free end 4 thereof moved with respect to the perimeter segment 2.

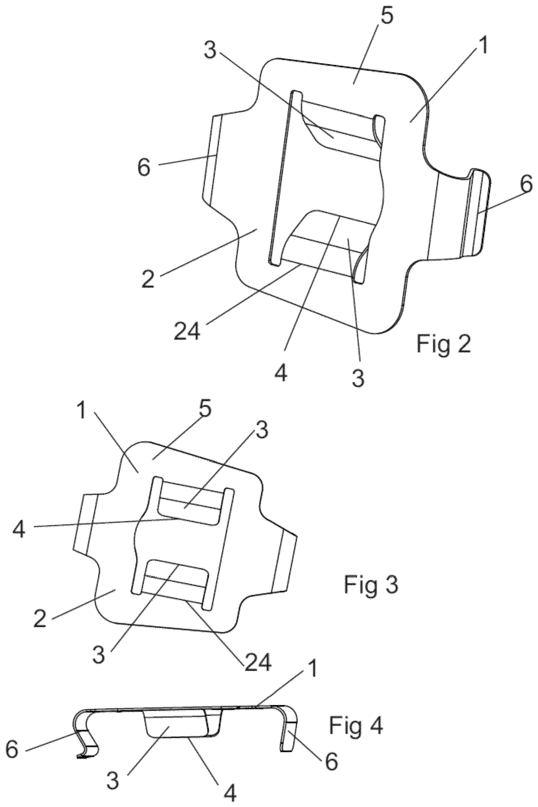

Figures 2 to 4 show another embodiment of a retainer 1 according to the invention. In this case, the perimeter segment 2 forms a closed perimeter frame 5 and has two flexible flanges 3, arranged in opposite regions of the closed perimeter frame 5, both extending towards the inside of the closed perimeter frame 5 and have the free end 4 thereof moved with respect to the closed perimeter frame 5. It also has first snap-fitting means 6 in the closed perimeter frame 5.

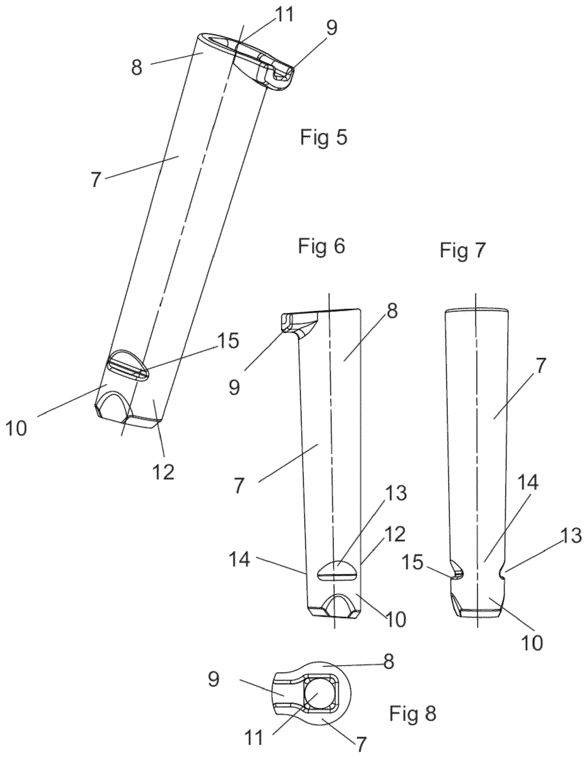

Figures 5 to 8 show a first embodiment of a pin 7 according to the invention. The pin 7 is substantially a slightly conical elongated cylinder with a first end 8 with a stop 9 and a second end 10. It also has at the first end 8 actuation means 11 consisting of an opening coaxial with the longitudinal axis of the pin 7 having a square cross-section. The pin 7 has a fixing region 12 close to the second end 10. The fixing region 12 has two blocking segments 13 and two unblocking segments 14. Each blocking segment 13 has a step, the riser 15 of which is oriented such that the outer surface of the riser 15 is facing the first end 8. The two unblocking segments 14 have a surface flush with the rest of the outer surface of the pin 7, in particular, with the riser oriented towards the first end 8, there is no discontinuity or step that may prevent or complicate the sliding of the free end 4 of the retainer 1 to the second end 10 of the pin 7.

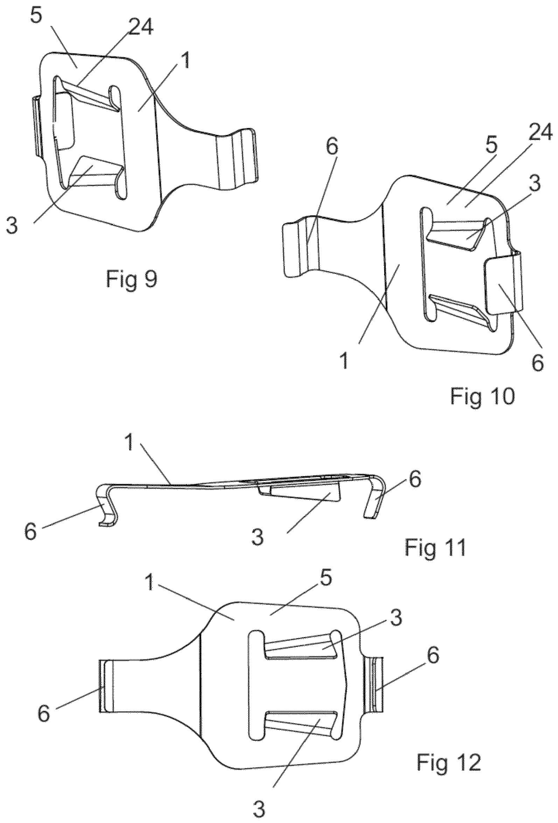

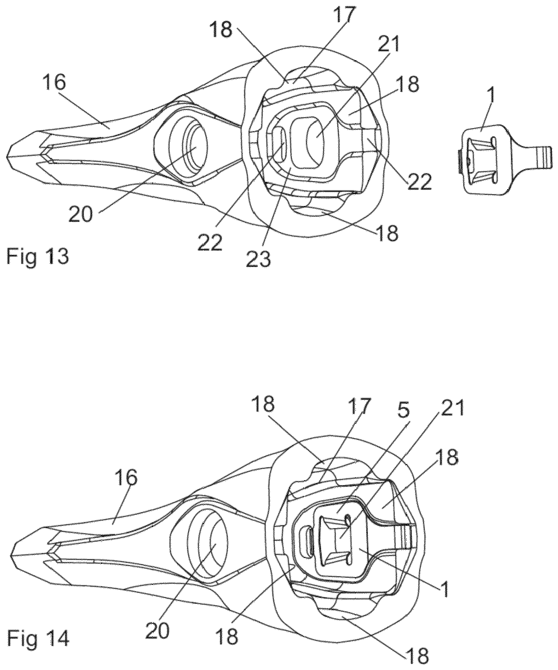

Figures 9 to 12 show another retainer 1, specifically one designed for being assembled in a wear element 16 (specifically a tooth) shown in Figures 13 and 14. The wear element 16 comprises a cavity 17 demarcated by side walls 18. This wear element 16 is designed for being fixed to a nose 19 by means of a single through pin 7 (alternative 1 mentioned above). Therefore, there are two openings in the side walls 18: an inlet opening 20 and an outlet opening 21 that are aligned with one another and, in this case, both being through openings. On the inner face of the side wall 18 having the outlet opening 21, there are second snap-fitting means 22 corresponding with the first snap-fitting means 6 of the retainer 1. This inner face also has a recess 23 in which the closed perimeter frame 5 of the retainer 1 is housed.

The side walls 18 are usually not parallel to one another and not perpendicular to the longitudinal axis of pin 7. Therefore, the perimeter segment 2 of retainer 1 will not be perpendicular to the longitudinal axis of the pin 7 either. However, it is advisable for the free end 4 of the flexible flange 3 to be perpendicular to the longitudinal axis of the pin 7. Therefore, the bending line 24 of the flexible flange 3 not being parallel to the free end 4 of the flexible flange 3 constitutes an advantage so as to compensate for the non-perpendicularity of the perimeter segment 2 with the longitudinal axis of the pin 7.

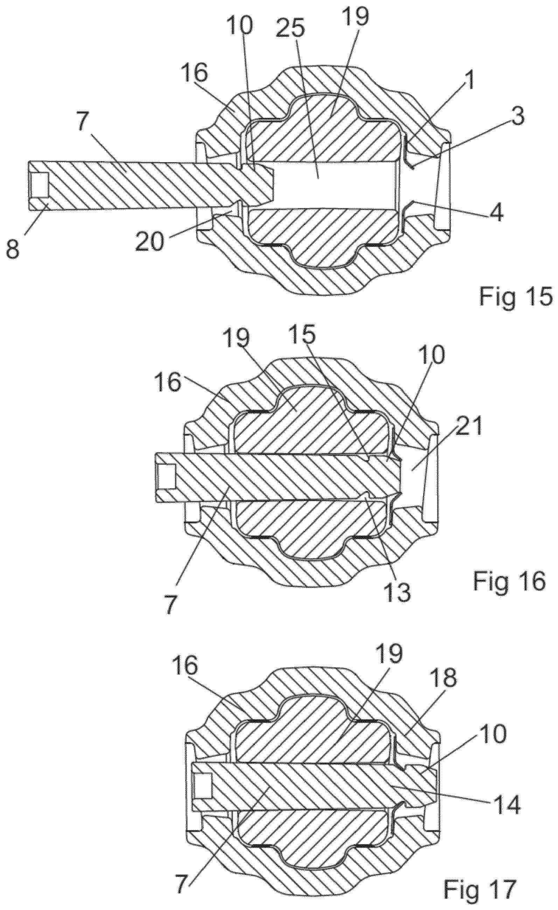

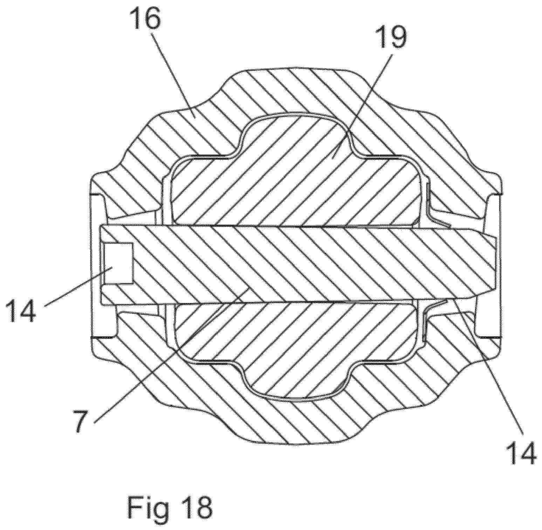

Figures 15 to 18 show a sequence of assembly in the case of the wear element 16 of Figures 13 and 14. The wear element 16 has the retainer 1 fixed on the inner face of the side wall 18 having the outlet opening 21. The wear element 16 is assembled on the nose 19 of a support element. In Figure 15, the pin 7 is in an insertion step. It is oriented angularly such that the steps will face the flexible flanges 3. Given that the retainer 1 is close to the outlet opening 21, the pin 7 can be introduced in the nose opening 25 without any force. In Figure 16, the pin 7 has already been introduced almost entirely, and the second end 10 abuts against the flexible flanges 3. From this moment, a certain force must be exerted to cause the elastic bending of the flexible flanges 3. In Figure 17, the pin 7 has already reached its assembled position, and the free ends 4 of the flexible flanges 3 have already reached the step of the respective blocking segments 13. From this moment, the pin 7 can no longer move backward because the free ends 4 abut against the risers 15 of the steps. To be able to remove the pin 7, it is sufficient to rotate it 90° around its longitudinal axis (Figure 18). In this manner, the free ends 4 come out of the respective steps and are positioned in the unblocking segments 14, where the surface of the pin 7 extends continuously (particularly, without any step which has riser oriented towards the first end 8). Therefore, there is no longer anything to prevent the extraction of the pin 7.

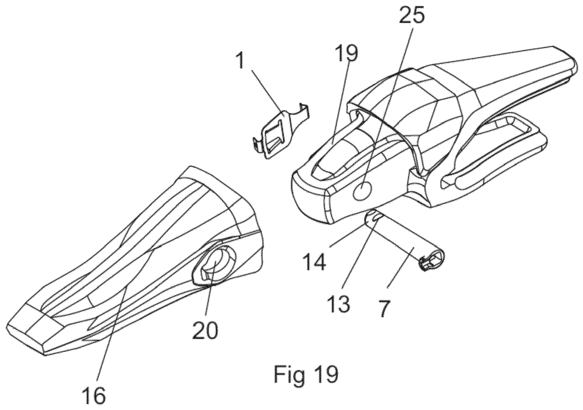

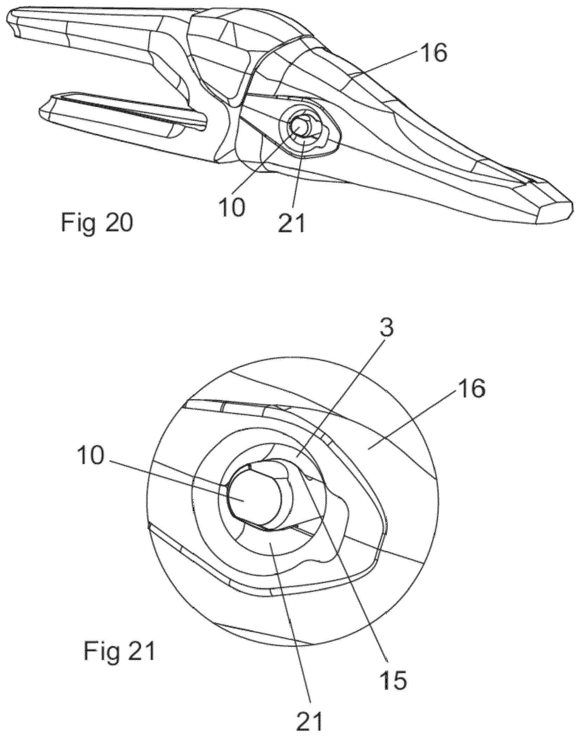

Figure 19 shows an exploded perspective view of the wear element 16 of Figures 13 to 18, of the retainer 1 of Figures 9 to 12, and of a support element (in this specific case, an adapter). Figure 20 shows the assembly of Figure 19 assembled, in which the outlet opening 21 can be seen, with the second end 10 of the pin 7 and the free end 4 of the flexible flanges 3 housed in the blocking segments 13, specifically abutting against the riser 15 of the steps.

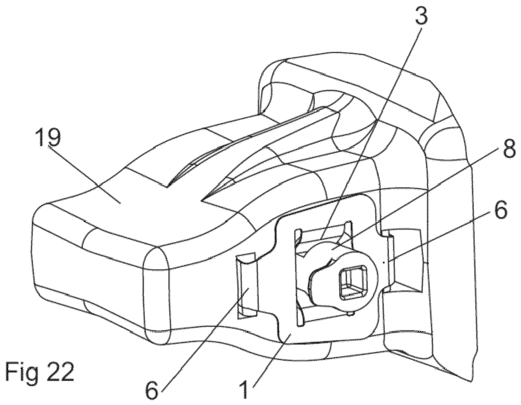

Figure 22 shows an embodiment corresponding with the case in which a pin 7, which is not a through pin, is used for fixing the wear element 16 in the nose 19, and specifically the case in which the retainer 1 is fixed to the nose 19. In order to be able to observe the positioning of the retainer 1, Figure 22 does not include the wear element 16. In this example, the fixing region 12 of the pin 7 is close to the first end 8 and is in the region which, in the assembled position, is in the inlet of the nose opening 25. The retainer 1 has first snap-fitting means 6 which are assembled on the second snap-fitting means 22 arranged around the nose opening 25.

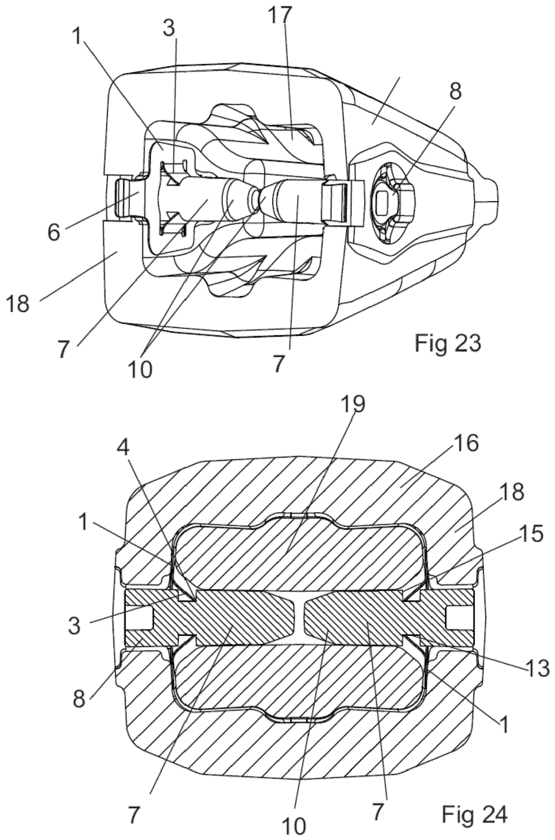

Figures 23 and 24 show an example in which two pins 7 are used for fixing the wear element 16 in the nose 19. In this case, the wear element 16 is an intermediate adapter which will be assembled on a nose 19 of a support element which, for example, can be welded to the lip of a shovel. In this case, the retainers 1 are fixed to the wear element 16. Figure 23 shows the assembled assembly but without the nose 19 so as to be able to observe the positioning of the retainers 1 on the inner faces of the side walls 18 of the wear element 16, whereas Figure 24 shows all the components (wear element 16, nose 19, two retainers 1, and two pins 7).

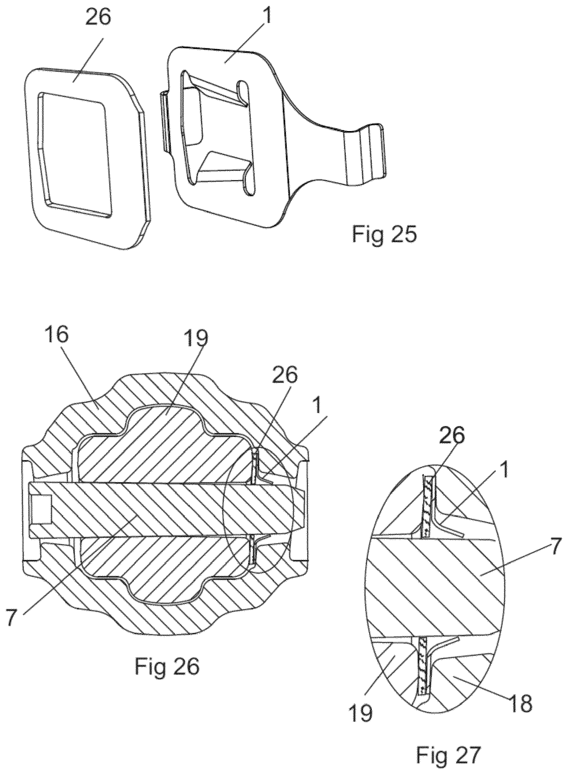

Figures 25 to 27 show an example in which the retainer 1 comprises a sheet of elastic material 26. In this example, the retainer 1 is fixed close to the outlet opening 21 of the wear element 16 and the sheet of elastic material 26 is between the retainer 1 and the nose 19.

## Claims

1. A retainer (1) suitable for blocking a pin (7), said pin (7) being suitable for fixing a wear element (16) in a support element of an earth moving machine, said wear element (16) comprising a cavity (17) where, in an assembled position in which said wear element (16) is assembled on said support element, a nose (19) present in said support element is housed in said cavity (17), where said cavity (17) is demarcated by side walls (18) with at least one through opening arranged in one of said side walls (18), where said nose (19) has a nose opening (25) which, in said assembled position, is aligned with said through opening of said wear element (16), where, in said assembled position said pin (7) is housed in said through opening and said nose opening (25), where said through opening defines a longitudinal axis, said longitudinal axis having a direction of insertion corresponding to the direction in which said pin (7) is introduced in said through opening to achieve said assembled position,
**characterized in that**:
said retainer (1) is formed from a sheet material comprising a perimeter segment (2), suitable for being fixed to a perimeter region of said through opening or of said nose opening (25), and a flexible flange (3) joined at one end to said perimeter segment (2) and suitable for extending towards said through opening or said nose opening (25), where the free end (4) of the flexible flange (3) is suitable for staying shifted forward, according to said direction of insertion, with respect to said perimeter segment (2).

2. The retainer (1) according to claim 1, **characterized in that** said perimeter segment (2) extends forming a closed perimeter frame (5), where said flange extends towards the inside of said frame.

3. The retainer (1) according to any one of claims 1 to 2, **characterized in that** said perimeter segment (2) has first snap-fitting means (6) suitable for being assembled on second snap-fitting means (22) present in said perimeter region of said opening, thereby fixing said retainer (1) to said perimeter region.

4. A pin (7) suitable for fixing a wear element (16) in a support element of an earth moving machine, said wear element (16) comprising a cavity (17) where, in an assembled position in which said wear element (16) is assembled on said support element, a nose (19) present in said support element is housed in said cavity (17), where said cavity (17) is demarcated by side walls (18) with at least one through opening arranged in one of said side walls (18), where said nose (19) has a nose opening (25) which, in said assembled position, is aligned with said through opening of said wear element (16), where, in said assembled position said pin (7) is housed in said through opening and said nose opening (25), where said through opening defines a longitudinal axis, said longitudinal axis having a direction of insertion corresponding to the direction in which said pin (7) is introduced in said through opening to achieve said assembled position, where said pin (7) defines a longitudinal axis of the pin (7) and has a first end (8) with actuation means (11) suitable for rotating the pin (7) according to its longitudinal axis, and a second end (10), opposite said first end (8),
**characterized in that**:
said pin (7) has a fixing region (12), where said fixing region (12) coincides, in the direction of said longitudinal axis, with said through opening or with the beginning of said nose opening (25) in said assembled position, where said fixing region (12) has a blocking segment having a step, where the riser (15) of said step is oriented towards said first end (8) and is suitable for housing the free end (4) of a flexible flange (3) of a retainer (1), when said retainer (1) is formed from a sheet material comprising a perimeter segment (2) and said flexible flange (3) joined at one end to said perimeter segment (2), said perimeter segment (2) being fixed to a perimeter region of said through opening or of said nose opening (25), and said flexible flange (3) extending towards said through opening or said nose opening (25), where the free end (4) of said flexible flange (3) stays shifted forward, according to said direction of insertion, with respect to said perimeter segment (2), thereby blocking the axial movement of the pin (7) in the direction opposite the direction of insertion, said fixing region (12) also comprising an unblocking segment (14) arranged at the same distance as said blocking segment, in the direction of said longitudinal axis of the pin (7), with respect to said first end (8), said unblocking segment (14) being displaced angularly, according to a rotation of said longitudinal axis of the pin (7), with respect to said blocking segment, where said unblocking segment (14) does not have said step but rather has a smooth segment, in which the side surface of the pin (7) extends continuously to the end of the second end (10).

5. The pin (7) according to claim 4, **characterized in that** said fixing region (12) has two blocking segments (13) arranged at the same distance, in the direction of said longitudinal axis of the pin (7), with respect to said first end (8) and arranged on circumferentially opposite sides, where each blocking segment (13) has a step, where the riser (15) of each step is oriented towards said first end (8) and is suitable for housing the free end (4) of one of the flexible flanges (3) of a retainer (1), when said retainer (1) has a perimeter segment (2) that extends forming a closed perimeter frame (5) and two flanges arranged in opposite regions of said closed perimeter frame (5), said flanges being joined to said closed perimeter frame (5) and extending towards the inside of said closed perimeter frame (5), said closed perimeter frame (5) being fixed to a perimeter region of said through opening or of said nose opening (25), where the free ends (4) of both flexible flanges (3) are suitable for staying shifted forward, according to said direction of insertion, with respect to said closed perimeter frame (5), thereby blocking the axial movement of the second end (10) in the direction opposite said direction of insertion, said fixing region (12) also comprising two unblocking segments (14) arranged at the same distance as said blocking segments (13), in the direction of said longitudinal axis of the pin (7), with respect to said first end (8), said unblocking segments (14) being displaced angularly, according to a rotation of said longitudinal axis of the pin (7), with respect to said blocking segments (13), where said unblocking segments (14) do not have said step but rather have a smooth segment, in which the side surface of the pin (7) extends continuously to the end of the second end (10).

6. The pin (7) according to one of claims 4 or 5, **characterized in that** said fixing region (12) is close to said second end (10).

7. A wear element (16) of an earth moving machine, said wear element (16) comprising a cavity (17) where, in an assembled position in which said wear element (16) is assembled on a support element, a nose (19) present in said support element is housed in said cavity (17), where said cavity (17) is demarcated by side walls (18) with two openings arranged in two of said side walls (18) opposite one another, which are aligned with one another and aligned, in said assembled position, with a through nose opening (25) arranged in said nose (19), where said openings and said nose opening (25) are suitable for housing therein a pin (7) suitable for fixing said wear element (16) in said nose (19) in said assembled position, where said openings define a longitudinal axis, where said longitudinal axis has a direction of insertion corresponding to the direction in which said pin (7) is introduced in said openings to achieve said assembled position, where said pin (7) defines a longitudinal axis of the pin (7) and has a first end (8) with actuation means (11) suitable for rotating the pin (7) according to its longitudinal axis, and a second end (10), opposite said first end (8), where, in said assembled position, said first end (8) is housed in one of said openings, referred to as inlet opening (20), which is a through opening, and said second end (10) is housed in the other one of said openings, referred to as outlet opening (21),
**characterized in that**:
said wear element (16) comprises a retainer (1) fixed to the inner face of the side wall comprising said outlet opening (21), said retainer (1) being formed from a sheet material comprising a perimeter segment (2), fixed to said inner face in a perimeter region of said outlet opening (21), and a flexible flange (3) joined at one end to said perimeter segment (2) and extending towards said outlet opening (21), where the free end (4) of said flexible flange (3) is inside said outlet opening (21).

8. The wear element (16) according to claim 7, **characterized in that** said perimeter segment (2) of said retainer (1) extends forming a closed perimeter frame (5) completely bordering said outlet opening (21).

9. The wear element (16) according to claim 8, **characterized in that** said retainer (1) has two flexible flanges (3), arranged in opposite regions of said closed perimeter frame (5) and joined to said closed perimeter frame (5) and extending towards said outlet opening (21), where the free end (4) of both flexible flanges (3) is inside said outlet opening (21).

10. The wear element (16) according to any one of claims 7 to 9, **characterized in that** said retainer (1) is metallic and is preferably made of austenitic stainless steel.

11. The wear element (16) according to any one of claims 7 to 10, **characterized in that** said perimeter segment (2) has first snap-fitting means (6) and said inner face of the side wall has second corresponding snap-fitting means (22), where said first snap-fitting means (6) are suitable for being assembled on said second snap-fitting means (22), thereby fixing said retainer (1) to said inner face.

12. The wear element (16) according to any one of claims 7 to 11, **characterized in that** said inner face of said side wall has a recess (23) suitable for housing therein said perimeter segment (2).

13. The wear element (16) according to any one of claims 7 to 12, **characterized in that** the side wall with said inlet opening (20) has, on its outer face, a recess extending to said inlet opening (20), suitable for housing therein a stop (9) arranged at the first end (8) of said pin (7).

14. An earth moving machine comprising a support element with a nose (19) suitable for having a wear element (16) assembled thereon by means of a pin (7), said wear element (16) comprising a cavity (17) where, in an assembled position in which said wear element (16) is assembled on said support element, said nose (19) is housed in said cavity (17), where said cavity (17) is demarcated by side walls (18) with at least one through opening arranged in one of said side walls (18), where said nose (19) has a nose opening (25) which, in said assembled position, is aligned with said through opening of said wear element (16), where, in said assembled position said pin (7) is housed in said through opening and said nose opening (25), where said nose opening (25) defines a longitudinal axis, said longitudinal axis having a direction of insertion corresponding to the direction in which said pin (7) is introduced in said through opening to achieve said assembled position,
**characterized in that**:
it comprises a retainer (1) which is formed from a sheet material comprising a perimeter segment (2), fixed to a perimeter region of said nose opening (25) and a flexible flange (3) joined at one end to said perimeter segment (2) and extending towards the inside of said nose opening (25).

15. The machine according to claim 14, **characterized in that** said perimeter segment (2) of said retainer (1) extends forming a closed perimeter frame (5) completely bordering said nose opening (25).

16. The machine according to any one of claims 14 to 15, **characterized in that** said perimeter segment (2) of said retainer (1) has first snap-fitting means (6) suitable for being assembled on second snap-fitting means (22) present in said perimeter region of said nose opening (25), thereby fixing said retainer (1) to said perimeter region.

17. A wear element (16) of an earth moving machine, said wear element (16) comprising a cavity (17) where, in an assembled position in which said wear element (16) is assembled on a support element, a nose (19) present in said support element is housed in said cavity (17), where said cavity (17) is demarcated by side walls (18) with a through opening arranged in one of said side walls (18), which is aligned, in said assembled position, with a nose opening (25) arranged in said nose (19), where said through opening and said nose opening (25) are suitable for housing therein a pin (7) suitable for fixing said wear element (16) in said nose (19) in said assembled position, where said through opening defines a longitudinal axis, where said longitudinal axis has a direction of insertion corresponding to the direction in which said pin (7) is introduced in said through opening to achieve said assembled position, where said pin (7) defines a longitudinal axis of the pin (7) and has a first end (8) with actuation means (11) suitable for rotating the pin (7) according to its longitudinal axis, and a second end (10), opposite said first end (8), where, in said assembled position, said first end (8) is housed in said through opening, referred to as inlet opening (20), and said second end (10) is housed inside said nose opening (25),
**characterized in that**:
said wear element (16) comprises a retainer (1) fixed to the inner face of the side wall comprising said inlet opening (20), said retainer (1) being formed from a sheet material comprising a perimeter segment (2), fixed to said inner face in a perimeter region of said inlet opening (20), and a flexible flange (3) joined at one end to said perimeter segment (2) and extending towards said nose opening (25), where the free end (4) of the flexible flange (3) stays shifted forward, according to said direction of insertion, with respect to said perimeter segment (2).

18. The wear element (16) according to claim 17, **characterized in that** said perimeter segment (2) of said retainer (1) extends forming a closed perimeter frame (5) completely bordering said inlet opening (20).
